# EUROPEAN PATENT APPLICATION

(11) **EP 4 571 354 A1**
(43) Date of publication of application: **18.06.2025**
(21) Application number: 24197054.0
(22) Date of filing: 28.08.2024
(51) Int. Cl.: G01S 7/481, G01S 7/4912, G01S 17/86, G01S 17/89, G02B 27/00

(54) **TWO-DIMENSIONAL PHOTONIC INTEGRATED CIRCUIT OPTICAL PHASED ARRAY FOR IMAGING SYSTEMS**

(30) Priority: 14.12.2023 US 202363609997 P; 23.07.2024 US 202418780847
(71) Applicant: Taara Connect, Inc., Sunnyvale, CA 94089 (US)
(72) Inventor: Palese, Stephen, Mountain View, 94043 (US)
(74) Representative: Derry, Paul Stefan

(57) **Abstract**

Aspects of the disclosure provide a device and method for capturing one or more images using a photonic integrated circuit (PIC) optical phased array (OPA) based imaging system. The method may include processing the environmentally or artificially-lit received image using one or more injected control wavelengths or wavefronts to enable electronic control of functionality such as real time color filtering, glint removal or other intensity image manipulation, image stabilization, collection of multiple images for panoramic composites, focal plane adjustment and/or other image optimization manipulations based on user inputs. These system level functionalities may be accomplished with a device utilizing a plurality of optical nano-antenna elements, plurality of phase and amplitude modulators, plurality of measurement photodiodes and plurality of other associated photonic constructs along with one or more CMOS processors to process the received image.

## Description

### CROSS-REFERENCE TO RELATED APPLICATIONS

The present application claims the benefit of the filing date of U.S. Provisional Application No. 63/609,997, filed December 14, 2023, the entire disclosure of which is incorporated by reference herein.

### BACKGROUND

Image systems for mobile phones, tablets, laptops and other computers, cameras, etc. may utilize opto-mechanical systems for image capture and processing. Such opto-mechanical systems allow for post hoc image processing, but may also require physically moving the imaging system to capture multiple images with stitching for panoramic composites performed following image capture required for post hoc processing.

Generally, current imaging technology may be limited in capabilities due to opto-mechanical systems employed which impact functionality and/or key technical performance metrics. Examples may include limited or lack of ability to perform real time color filtering and intensity manipulation; limited bandwidth of image stabilization to compensate for external vibrations and disturbances; physically having to move the camera to capture multiple images with post stitching for panoramic composites; and limited capability to collect and correct the focal plane of the image in real time (focal plane adjustment).

### BRIEF SUMMARY

Aspects of the disclosure are directed towards a method of capturing one or more images using an imaging device. The method comprising generating, by one or more processors of an imaging device, one or more control wavelengths based on one or more user inputs; receiving, at an optical phased array (OPA), light from an environment of the imaging device; driving, by the one or more processors of the imaging device, a plurality of phase and amplitude modulators of the OPA to apply the one or more control wavelengths to process the received light; and capturing, by the one or more processors of the imaging device, an image based on the processed received light.

In one example, generating, by the one or more processors of the imaging device, the one or more control wavelengths based on the one or more user inputs includes generating a first control wavelength and a second control wavelength; receiving, at the OPA, light from the environment of the imaging device includes receiving light at a first time step and a second time step; driving, by the one or more processors of the imaging device, the plurality of phase and amplitude modulators of the OPA to apply the one or more control wavelengths to process the received light includes driving the plurality of phase and amplitude modulators at the first time step to apply the first control wavelength to process the light received at the first time step and driving the plurality of phase and amplitude modulators at the second time step to apply the second control wavelength to process the light received at the second time step; and capturing, by the one or more processors of the imaging device, an image based on the processed received light includes capturing a first image at the first time step based on the processed light received at the first time step and capturing a second image at the second time step based on the processed light received at the second time step. Additionally, the method may further include generating, by the one or more processors of the imaging device, a composite image of the first image and the second image.

In a further example, the method additionally includes transmitting, by the OPA of the imaging device, the one or more control wavelengths; reflecting, by the OPA of the imaging device, the one or more control wavelengths back; and receiving, by OPA of the imaging device, the one or more control wavelengths.

In another example, the one or more user inputs are received from a user interface.

In an additional example, driving, by the one or more processors of the imaging device, the plurality of phase and amplitude modulators of the OPA to apply the one or more control wavelengths to process the received light includes measuring, by one or more photodiodes, one or more measurements associated with the one or more control wavelengths; and driving, the plurality of phase and amplitude modulators based on the one or more measured values associated with the one or more control wavelengths.

In a further example, driving, by the one or more processors of the imaging device, the plurality of phase and amplitude modulators of the OPA to apply the one or more control wavelengths to process the received light includes measuring, by the one or more photodiodes, one or more measurements associated with the received light; and driving, the plurality of phase and amplitude modulators based on the one or more measurements associated with the received light.

In another example, driving, by the one or more processors of the imaging device, the plurality of phase and amplitude modulators of the OPA to apply the one or more control wavelengths to process the received light includes measuring, by one or more photodiodes, one or more measurements associated with the one or more control wavelengths and the received light; and driving, the plurality of phase and amplitude modulators based on the one or more measured values associated with the one or more control wavelengths and the received light. Additionally, the one or more measurements may be at least one of i) intensity; ii) power; and iii) relative phase.

In an additional example, the method further includes transmitting, by the OPA, the processed received light to a second OPA; and transmitting, by the second OPA, the processed received light to a focal plane array (FPA) of the imaging device. Additionally, the method may further include adjusting, by an amplitude modulator array of the FPA, an amount of light received at one or more elements of the FPA. Additionally or alternatively, the method may further include driving, by the one or more processors of the imaging device, a plurality of phase and amplitude modulators of the second OPA to apply the one or more control wavelengths to further process the processed received light. Additionally or alternatively, the one or more control wavelengths may be a plurality of control wavelengths. Additionally or alternatively, driving, by the one or more processors of the imaging device, the plurality of phase and amplitude modulators of the OPA to apply the plurality of control wavelengths to process the received light may include applying a first control wavelength of the plurality of control wavelengths; and wherein, driving, by the one or more processors of the imaging device, the plurality of phase and amplitude modulators of the second OPA to apply the one or more control wavelengths to further process the processed received light includes applying a second control wavelength of the plurality of control wavelengths, wherein the second control wavelength is different from the first control wavelength.

Another aspect of the disclosure is directed to an imaging device configured to capture one or more images. The imaging device comprising an optical phased array (OPA) receiver, the OPA receiver comprising a plurality of emitters configured to transmit and receive light, a plurality of phase and amplitude modulations configured to modulate light propagating through the imaging device, and one or more photodiodes configured to measure one or more values associated with light propagating through the imaging device. The imaging device further including a focal plane array (FPA) OPA, the FPA OPA comprising a plurality of emitters configured to transmit and receive light, a plurality of phase and amplitude modulations configured to modulate light propagating through the imaging device, and one or more photodiodes configured to measure one or more values associated with light propagating through the imaging device. The imaging device further including a control unit, the control unit comprising one or more processors, and one or more light sources configured to generate light. The imaging device further including a FPA configured to receive light from the FPA OPA and record an image based on the received light; wherein the OPA receiver, the FPA OPA, and the control unit are disposed on a photonics integrated circuit (PIC).

In one example, the OPA receiver further includes one or more reflectors associated with an emitter the plurality of the emitters, the one or more reflectors configured to reflect one or more control wavelengths back to the emitter of the plurality of emitters.

In another example, the imaging device further includes one or more micro-lens arrays associated with at least one of i) the OPA receiver, and ii) the FPA OPA.

In a further example, the imaging device additionally includes one or more sensors configured to collect one or more sensor measurements, wherein the one or more sensors include at least one of i) a gyroscope, an accelerometer, and inertial measurement unit (IMU).

In an additional example, the imaging device is arranged in a stack configuration.
In another example, the one or more processors are configured to: generate, one or more control wavelengths based on one or more user inputs; drive at least one of i) the plurality of phase and amplitude modulators of the OPA receiver to apply the one or more control wavelengths to process received light, and ii) the plurality of phase and amplitude modulators of the FPA OPA to apply the one or more control wavelengths to process received light; and capture an image based on the processed received light.

### BRIEF DESCRIPTION OF DRAWINGS

FIGURES 1A-1B are pictorial diagrams of an imaging in accordance with aspects of the disclosure.
FIGURE 2 is a block diagram of an imaging device in accordance with aspects of the disclosure.
FIGURE 3 represents features of an optical phased array architecture in accordance with aspects of the disclosure.
FIGURE 4 represents features of an optical control architecture in accordance with aspects of the disclosure.
FIGURE 5 is a block diagram of a user device in accordance with aspects of the disclosure.
FIGURE 6 is a block diagram in accordance with aspects of the disclosure.

### DETAILED DESCRIPTION

### Overview

The technology relates to an imaging device implemented using optical phased arrays (OPA). The imaging device may be used in image capture and related image processing. The imaging device may include one or more OPAs and one or more processors. The one or more OPAs and/or one or more processors may be included in a photonics integrated circuit (PIC). The one or more processors may be one or more complementary metal-oxide semiconductor (CMOS) processors. The imaging device may be configured to process received light based on one or more control wavelengths or wavefronts for phase and wavefront control of the received light and capture images based on the processed light.

Generally, current imaging technology may be limited in capabilities due to opto-mechanical systems employed which impact functionality and/or key technical performance metrics. Examples may include limited or lack of ability to perform real time color filtering and intensity manipulation; limited bandwidth of image stabilization to compensate for external vibrations and disturbances; physically having to move the camera to capture multiple images with post stitching for panoramic composites; and limited capability to collect and correct the focal plane of the image in real time (focal plane adjustment).

To address this, as noted above, an imaging device may be implemented using PICs with OPAs. In this regard, the imaging device may utilize the functional capabilities of the OPA to perform complex image processing and result in improved image capture capabilities. In this regard, and imaging device implemented using PIC-OPAs may be configured to perform real time color filtering and intensity manipulation; perform image stabilization to compensate for external vibrations and disturbances; not require physical to movement thereof to capture multiple images for panoramic composites; and collect and correct the focal plane of the image in real time (focal plane adjustment).

### Example Systems

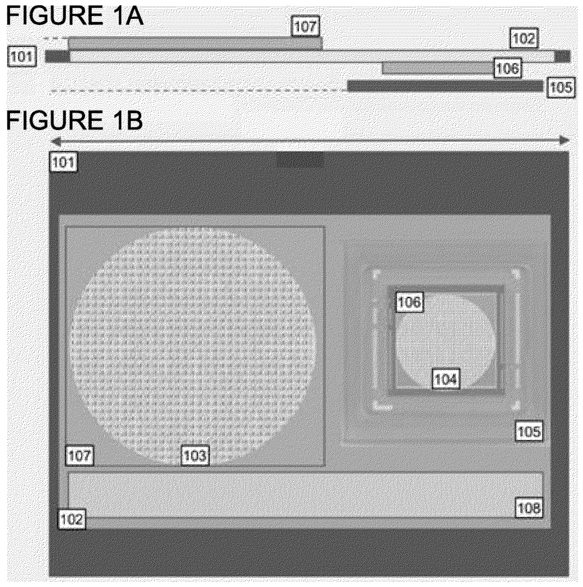

As discussed above, an imaging device may include one or more OPAs and one or more processors (e.g., CMOS processors). FIGURES 1A-1B illustrate an example imaging device 101. FIGURE 1A illustrates a side view of the imaging device 101 and FIGURE 1B illustrates an overhead view of the imaging device 101. The imaging device 101 includes an a first OPA or OPA receiver 103, a second OPA or a focal plane array (FPA) OPA 104, an FPA 105, a micro-lens array 106 associated with the FPA OPA 104, a micro-lens array 107 associated with the OPA receiver 103, and block or control unit 108. Block 108 may include one or more processors (e.g., CMOS processors). Additionally, block 108 may include the one or more light sources (e.g., light emitting diode (LED), integrated on-PIC laser, external coupled laser, etc.). The OPA receiver 103, FPA OPA 104, and block 108 of the imaging device 101 are illustrated as included on a photonics integrated circuit (PIC) 102. However, in some implementations, one or more of these components may not be included on PIC 102 and/or may be included on a differing PIC, separate from PIC 102.

In some implementations, the micro-lens array 106 may be a lens, a metalens, a micro-lens array, or any combination thereof. Additionally or alternatively, micro-lens array 107 may be a lens, a metalens, a micro-lens array, or any combination thereof.

As illustrated in the side view of FIGURE 1A, the imaging device may be arranged in a stack configuration. In this regard, the micro-lens array 107 associated with the OPA receiver 103 may be disposed on a first surface of the imaging device 101. During operation, the first surface may face an environment of the imaging device. The environment being the subject of captured images. The micro-lens array 106 associated with the FPA OPA 104 may be disposed on a second surface of the imaging device 101. The second surface may be opposite from the first surface. The FPA 105 may be disposed a distance from the micro-lens array 106 on the second side of the imaging device 101. The distance may correspond to a focal plane of the imaging device 101. Although the OPA Receiver 103 and FPA OPA 104 are illustrated as circular one or both of them can be configured to be any geometric shape including oval, square, rectangle, hexagons, octagons, etc. Additionally or alternatively, the shape of OPA Receiver 103 and FPA OPA 104 can be modified to change the relative size and/or pixel spacing of OPA Receiver 103 input and FPA OPA 104 output.

The thickness of the imaging device 101 as illustrated in FIGURE 1A may be on the order of 4 mm, or more, or less. The height and width of the imaging device as illustrated in FIGURE 1B may be on the order of 10-24 mm, or more, or less.

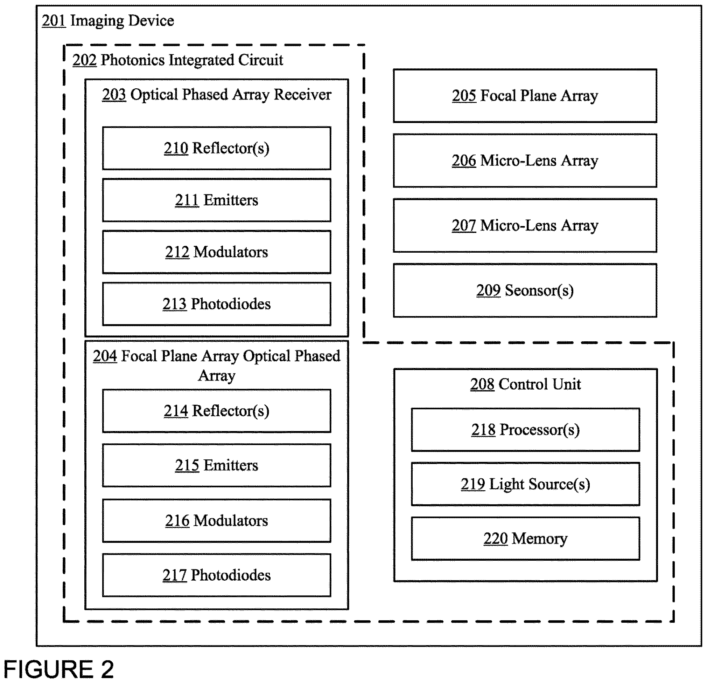

FIGURE 2 is a block diagram of an example imaging device 201. Imaging device 201 includes additional components in relation to imaging device 101 which may support image processing. Imaging device 201 includes a first OPA or an OPA receiver 203, a second OPA or an FPA OPA 204, an FPA 205, a micro-lens array 206 which may be associated with the FPA OPA 204, a micro-lens array 207 which may be associated with the OPA receiver 203, block 108, and one or more sensors 209. The OPA receiver 203, FPA OPA 204, and block or control unit 208 of the imaging device 201 are illustrated as included on PIC 202. However, in some implementations, one or more of these components may not be included on PIC 202 and/or may be included on a differing PIC, separate from PIC 202. In some instances, the micro-lens arrays 206, 207 and/or the one or more sensors may or may not be included on PIC 202 may or may not be included on a differing PIC, separate from PIC 202.

In some implementations, the micro-lens array 206 may be a lens, a metalens, a micro-lens array, or any combination thereof. Additionally or alternatively, micro-lens array 207 may be a lens, a metalens, a micro-lens array, or any combination thereof.

The OPA receiver 203 may be configured to receive light from an environment of the imaging device. The environment being the subject of captured images. The OPA receiver 203 includes one or more reflectors, partial reflectors, or retroreflector photonic constructs 210, a plurality of emitters 211, a plurality of phase and amplitude modulators 212, and a plurality of photodiodes (PD) 213. The components of the OPA receiver 203 may be connected via a plurality of waveguides or optical fibers. Additionally, micro-lens array 207 may be associated with the OPA receiver 203. The micro-lens array 207 may be a micro-lens layer adjacent to an emitter layer including the plurality of emitters 211. In this regard, each emitter of the emitter layer may correspond to a micro-lens of the micro-lens layer. In some instances, the plurality of emitters 211 may be a plurality of optical antennas. In some instances the micro-lens array 207 may be a single lens such as, for example, a metalens or photonic construct emulating the functionality of the micro-lens array. The one or more reflectors 210 may correspond to an emitter of the plurality of emitters 211.

The plurality of phase and amplitude modulators 212 may be formed in one or more modulator layers and may be configured to modify the phase and/or amplitude of received (Rx) light. In this regard, the plurality of phase and amplitude modulators 212 may allow for controlling Rx light characteristics. In some instances, each layer may be a layer of one or more phase modulators or one or more amplitude modulators. In some instances, the one or more modulator layers may include one or more multiplexers or demultiplexers. In some instances, the one or more modulator layers may include the plurality of PDs 213. The plurality of PDs 213 may be coupled to each phase and amplitude modulator in a layer of phase and amplitude modulators. In some instances, a single PD may be coupled to two or more phase and amplitude modulators of a layer via a waveguide tap coupler. The plurality of PDs 213 may be configured to measure one or more values such intensity, power, and/or relative phase or wavefronts of the injected control optical wavelengths. The measured values may be used in turn to control and/or analysis of Rx light (e.g., as feedback).

The plurality of emitters 211 or optical antennas may be configured to transmit and receive light. In this regard, the plurality of emitters may be configured to receive incoming light (e.g., Rx light). Additionally, the plurality of emitters may be configured to transmit the one or more control wavelengths. The one or more control wavelengths may be reflected back to the plurality of emitters 211 via the one or more reflectors 210. In this regard, the reflected back control wavelengths may be used for phase and wavefront control of the Rx light.

The FPA OPA 204 may be configured to receive light from the OPA receiver 203. Like the OPA receiver 203, the FPA OPA includes one or more reflectors, partial reflectors, or retroreflector photonic constructs 214, a plurality of emitters 215, a plurality of phase and amplitude modulators 216, and a plurality of PDs 217. The components of the FPA OPA 204 may be connected via a plurality of waveguides or optical fibers Additionally, micro-lens array 206 may be associated with the FPA OPA 204. The micro-lens array 206 may be a micro-lens layer adjacent to an emitter layer including the plurality of emitters 215. In this regard, each emitter of the emitter layer may correspond to a micro-lens of the micro-lens layer. In some instances, the plurality of emitters 215 may be a plurality of optical antennas. In some instances the micro-lens array 206 may be a single lens such as, for example, metalens or photonic construct emulating the functionality of the micro-lens array. The one or more reflectors 214 may correspond to an emitter of the plurality of emitters 215.

The plurality of phase and amplitude modulators 216 may be formed in one or more modulator layers and may be configured to modify the phase and/or amplitude of received (Rx) light. In this regard, the plurality of phase and amplitude modulators 216 may allow for the control of Rx light characteristics. In some instances, each layer may be a layer of one or more phase modulators or one or more amplitude modulators. In some instances, the one or more modulator layers may include one or more multiplexers or demultiplexers. In some instances, the one or more modulator layers may include the plurality of PDs 217. The plurality of PDs 217 may be coupled to each phase and amplitude modulator in a layer of phase and amplitude modulators. In some instances, a single PD may be coupled to two or more phase and amplitude modulators of a layer via a waveguide tap coupler. The plurality of PDs 217 may be configured to measure one or more values such intensity, power, and/or relative phase of control wavelengths. The measured values may be used in turn to control and/or analysis of Rx light (e.g., as feedback).

The plurality of emitters 215 or optical antennas may be configured to transmit and receive light. In this regard, the plurality of emitters may be configured to receive incoming light (e.g., Rx light). Additionally, the plurality of emitters may be configured to transmit light to the FPA 205. Additionally, the plurality of emitters may be configured to transmit the one or more control wavelengths. The one or more control wavelengths may be reflected back to the plurality of emitters 215 via the one or more reflectors 214. In this regard, the reflected back control wavelengths may be used for phase and wavefront control of the Rx light.

The FPA 205 may be an image sensor of the imaging device 201. In this regard, the FPA 205 may be configured to receive light from the FPA OPA 204 and record an image based on the received light. The recorded image may be saved on a memory (e.g., memory 220) of the imaging device 201. In some instances, the PIC 202 or the FPA 205 may additionally include an amplitude modulator array. The amplitude modulator array can be used to adjust the amount of light directed to elements of the FPA 205 on an element-by-element basis. This adjustment can, for example, be utilized for brightness adjustment, glint removal, aperture stop adjustment, as well as other amplitude dependent operations.

The sensor(s) 209 may be configured to collect one or more sensor measurements. The one or more sensors may include different types of sensors such as, for example, gyroscopes, accelerometers, inertial measurement units (IMU), etc. The one or more sensors 209 may be configured to collect the one or more sensor measurements at multiple time steps. The one or more measurements may be stored in a memory (e.g., memory 220) of the imaging device 201.

Block 208 includes one or more processors 218 (e.g., CMOS processors), one or more light sources 219, and memory 220. The one or more light sources 219 may be a light emitting diode (LED), integrated on-PIC laser, external coupled laser, etc. The one or more processors 218 may be CMOS processors. The one or more processors may be or include any conventional processors, such as commercially available CPUs. Additionally or alternatively, the one or more processors may include or be a dedicated device such as an application specific integrated circuit (ASIC) or another hardware-based processor, such as a field programmable gate array (FPGA). Although FIGURE 2 functionally illustrates the one or more processors 218 and memory 220 as being within block 208, the one or more processors 218 and memory 220 may actually comprise multiple processors and memories that may or may not be located on the PIC 202. Accordingly, references to a processor or computer will be understood to include references to a collection of processors or computers or memories that may or may not operate in parallel.

Memory 220 may store information accessible by the one or more processors 218, including data, and instructions, that may be executed by the one or more processors 218. The memory may be of any type capable of storing information accessible by the processor, including a computer-readable medium such as a hard-drive, memory card, ROM, RAM, DVD or other optical disks, as well as other write-capable and read-only memories. The system and method may include different combinations of the foregoing, whereby different portions of the data and instructions are stored on different types of media.

Data may be retrieved, stored or modified by one or more processors 218 in accordance with the instructions. For instance, although the system and method are not limited by any particular data structure, the data may be stored in computer registers, in a relational database as a table having a plurality of different fields and records, XML documents or flat files. The data may also be formatted in any computer-readable format such as, but not limited to, binary values or Unicode. By further way of example only, image data may be stored as bitmaps including of grids of pixels that are stored in accordance with formats that are compressed or uncompressed, lossless (e.g., BMP) or lossy (e.g., JPEG), and bitmap or vector-based (e.g., SVG), as well as computer instructions for drawing graphics. The data may comprise any information sufficient to identify the relevant information, such as numbers, descriptive text, proprietary codes, references to data stored in other areas of the same memory or different memories (including other network locations) or information that is used by a function to calculate the relevant data.

The instructions may be any set of instructions to be executed directly (such as machine code) or indirectly (such as scripts) by the one or more processors 218. For example, the instructions may be stored as computer code on the computer-readable medium. In that regard, the terms "instructions" and "programs" may be used interchangeably herein. The instructions may be stored in object code format for direct processing by the one or more processors 218, or in any other computer language including scripts or collections of independent source code modules that are interpreted on demand or compiled in advance.

In some instances, the one or more processors 218 may be operatively connected to at least one of the PDs and at least one layer of phase and amplitude modulators of the plurality of PDs 213 of the OPA 203, the plurality of PDs 217 of the FPA OPA 204, or both. In this regard, the one or more processors 218 may be configured to drive (e.g., modify the output phase and/or output amplitude) of the at least one layer of phase and amplitude modulators of the plurality of phase and amplitude modulators 212 of the OPA 203, the plurality of phase and amplitude modulators 216 of the FPA OPA 204, or both. Additionally, the one or more processors 218 may be configured to utilize value(s) measured by the PDs to drive the at least one layer of phase and amplitude modulators of the OPA 203, the FPA OPA 204, or both.

The one or more processors 218 may additionally be configured to generate one or more control wavelengths via one or more light sources 219 (e.g., light emitting diode (LED), integrated on-PIC laser, external coupled laser, etc.). The one or more processors 218 may be further configured to apply the one or more control wavelengths to optical waveguides co-propagating with the Rx light in the OPA 203, the FPA OPA 204, or both. In this regard, the one or more processors 218 may drive the plurality of phase and amplitude modulators 212, 216 to apply the one or more control wavelengths to facilitate functional processing of the Rx light. In this regard, the one or more processors 218 of the imaging device 201 may record or capture an image of the processed light. The imaging device 201 may record the image at FPA 205 of the imaging device 201. The recorded image may be saved on the memory 220 of the imaging device 201.

For example, a control wavelength may be in a particular color band (e.g., "blue" band, "green" band, "red" band, "infrared" band, etc.) to more closely match the optical propagation characteristics of the Rx spectral bands In such an example, if a control wavelength is in the red band, such that the Rx light red band shows the same functional performance as the associated red control wavelength. The bands may be broken up into one or more sub-bands to improve this correlation. The control wavelengths may be multiplexed/demultiplexed spectrally around the Rx light bands, temporally multiplexed with higher peak power and/or coherently mixed with a local oscillator at the PD to provide higher signal contrast relative to the Rx light. This may allow the one or more processors 218 of the imaging device 201 to record or capture an image based on the processed light. The recorded image may be saved on the memory 220 of the imaging device 201.

Additionally or alternatively the feedback on the Rx light using the one or more control wavelengths may be generated based on one or more sensor measurements from the one or more sensors 209 (e.g., gyroscope accelerometer, inertial measurement unit (IMU), etc.). In some instances, the feedback based on the one or more sensor measurements may be updated during each time step (e.g., time corresponding to the receipt of the one or more measurements). In this regard, the one or more control wavelengths may process Rx light to cancel out or compensate for noise or motion detected by the one or more sensors 209. In some instances, the feedback on the Rx light using the one or more control wavelengths may be updated based on the one or more sensor measurements during each time step (e.g., time corresponding to the receipt of the one or more measurements).

Additionally or alternatively, the one or more control wavelengths may be used to look at the Rx light within a portion of a field of view (FOV) on the imaging device. In this regard, the one or more control wavelengths may process Rx light such that only RX light within a particular portion of a FOV is routed through the imaging device and captured as an image. As such, the portion of the total FOV or field of regard (FOR) may be captured without need to physically move the imaging device 201.

Additionally or alternatively, the one or more control wavelengths may be used to set an image plane. The image plane may be a particular distance from the imaging device. In this regard, the feedback on the Rx light using the one or more control wavelengths may process Rx light such that light at a particular image plane this is in focus at the imaging device. A series of these images at different planes can be saved in quick temporal succession to form an image hypercube from which the image plane of interest can be chosen or a three dimensional image can be rendered.

Additionally or alternatively, the one or more control wavelengths may be used as feedback for a particular intensity or be generated based on a target pattern. The target pattern may include example images with particular intensity measurements to be compared to or correlated with the Rx light. In this regard, the one or more control wavelengths may process Rx light such that glint or high intensity values may not survive the processing.

Additionally, the one or more control wavelengths and functionality enabled thereby may be determined based on one or more inputs from a user. The one or more inputs may be received at a user interface (not shown). In this regard, a user may select a mode or feature that determines what control wavelength(s) and how the corresponding processing is performed on incoming light. In some instances, multiple control wavelengths may be utilized iteratively to process Rx light in accordance with the inputs from the user. For example, if a user selects a full color image, or image including all the colors of the visible light spectrum, the respective control wavelengths corresponding to each band of the visible light may be used to process Rx light iteratively. In this regard, the one or more processors 218 of the imaging device 201 may record or collect 1-N images. Each of the 1-N images in a different visible light band. The recorded images may be stored in the memory 220 of the imaging device 201. The one or more processors 218 of the imaging device may be further configured to generate the full color image using the 1-N stored images.

In some instances, the control wavelength phase or wavelength itself associated with an Rx band may be dithered. In this regard, the control wavelength may be dithered according to an orthogonal set of functions (e.g., orthogonal basis functions). The dithering may be time-division dithering, frequency division dithering, or some combination thereof. Dithers may be applied to differing subsets of phase and amplitude modulators of the plurality of phase and amplitude modulators 212, 216. Each subset of phase and amplitude modulators may correspond to a function of the orthonormal set of functions. In some implementations, the orthonormal set of functions may be Walsh functions.

For time-division dithering, each dither may be applied sequentially. In this regard, a dither may be applied to a different subset of phase and amplitude modulators for each sequential signal. The dither frequency for each dither may be selected from a predetermined set of frequencies. The frequency of each dither may or may not be the same.

For frequency-division dithering, each dither may be applied simultaneously. In this regard, a dither may be applied to a different subset of phase and amplitude modulators for each signal. The dither frequency for each signal may be selected from a predetermined set of frequencies. In some instances, each of the frequencies of the predetermined set of frequencies may be unique. In such instances, the frequencies of the predetermined set of frequencies may be selected such that the frequencies do not interfere with one another. Additionally or alternatively, in some instances, each of the plurality of predetermined frequencies may not be unique. In such instances, the perturbation of the plurality of perturbations utilizing the same frequencies, or frequencies that may interfere, may be selected such that the frequencies will not interfere. For example, if two perturbations utilize the same frequency, one perturbation may be utilized via a sine function and the other may be utilized a cosine function where one of the functions may be shifted by π/2 such that the perturbations are orthogonal and/or out of phase.

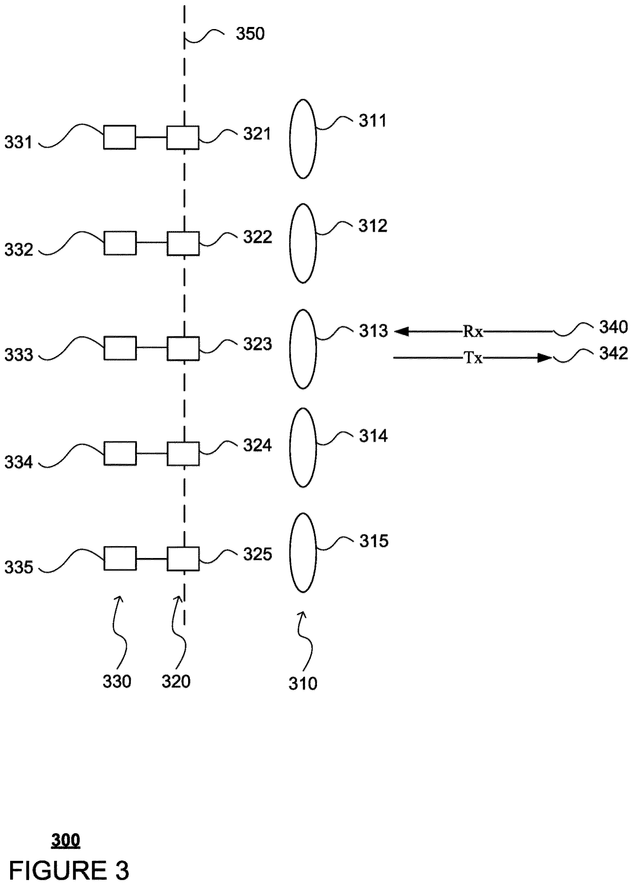

FIGURE 3 represents features of OPA architecture represented as an example OPA architecture 300. The OPA architecture 300 may be representative of components of the OPA receiver 103, 203 FPA OPA 104, 204, and associated components thereof. The OPA architecture 300 includes representations of a micro-lens array 310, a plurality of emitters or optical antennas 320, and a plurality of phase and amplitude modulators 330. For clarity and ease of understanding, additional waveguides and other features are not depicted. Arrows 340, 342 represent the general direction of Tx light (e.g., control wavelengths, light to FPA, etc.) and Rx light (e.g., light from the environment, reflected back control wavelengths, etc.) as such light passes or travel through the OPA architecture 300.

The micro-lens array 310 may include a plurality of convex micro-lens 311-315 that focus the Rx light onto respective ones of the plurality emitters positioned at the focal points of the micro-lens array 310. In this regard, the dashed-line 350 represents the focal plane of the micro-lens 311-315 of the micro-lens array 310. The micro-lens array 310 may be arranged in a grid pattern with a consistent pitch, or distance, between adjacent lenses. In other examples, the micro-lens array 310 may be in different arrangements having different numbers of rows and columns, different shapes, and/or different pitch (consistent or inconsistent) for different lenses.

Each micro-lens of the micro-lens array may be 1's, 10's, or 100's of micrometers in diameter and/or height. In addition, each micro-lens of the micro-lens array may be manufactured by molding, printing, or etching a lens directly into a wafer of the OPA architecture. 300. Alternatively, the micro-lens array 310 may be molded as a separately fabricated micro-lens array. In this example, the micro-lens array 310 may be a rectangular or square plate of glass or silica a few mm (e.g., 10 mm or more or less) in length and width and 0.2 mm or more or less thick. Integrating the micro-lens array within the OPA architecture 300 may allow for the reduction of the grating emitter size and an increase in the space between emitters. In this way, two-dimensional waveguide routing in the OPA architecture may better fit in a single layer optical phased array. In other instances, rather than a physical micro-lens array, the function of the micro-lens array may be replicated using an array of diffractive optical elements (DOE).

Each micro-lens of the micro-lens array may be associated with a respective emitter of the plurality of emitters 320. For example, each micro-lens may have an emitter from which Tx signals are received and to which the Rx signals are focused. As an example, micro-lens 311 is associated with emitter 321. Similarly, each micro-lens 312-315 also has a respective emitter 322-325. In this regard, for a given pitch (i.e., edge length of a micro-lens edge length) the micro-lens focal length may be optimized for best transmit and receive coupling to the underlying emitters. This arrangement may thus increase the effective fill factor of the Rx light at the respective emitter, while also expanding the Tx light received at the micro-lenses from the respective emitter before the Tx light leaves the OPA architecture 300.

The plurality of emitters 320 may be configured to convert emissions from waveguides to free space and vice versa. The emitters may also generate a specific phase and intensity profile to further increase the effective fill factor of the Rx light and improve the wavefront of the Tx light. The phase and intensity profile may be determined using inverse design or other techniques in a manner that accounts for how transmitted light will change as it propagates to and through the micro-lens array. The phase profile may be different from the flat profile of traditional grating emitters, and the intensity profile may be different from the gaussian intensity profile of traditional grating emitters. However, in some implementations, the emitters may be Gaussian field profile grating emitters.

The phase and amplitude modulators 330 may allow for sensing and measuring Rx light and the altering of Tx light and the combining of input light into a single waveguide or fiber. Each emitter may be associated with a phase and amplitude modulator. As shown in FIGURE 3, each emitter may be connected to a respective phase and amplitude modulator. As an example, the emitter 320 is associated with a phase and amplitude modulator 330. The Rx light received at the phase and amplitude modulators 331-335 may be provided to receiver components including a sensor, and the Tx light from the phase and amplitude modulators 331-335 may be provided to the respective emitters of the plurality of emitters 320. The architecture for the plurality of phase and amplitude modulators 330 may include at least one layer of phase and amplitude modulators having at least one phase and amplitude modulator connected to an emitter of the plurality of emitters 320. In some examples, the phase and amplitude modulator architecture may include a plurality of layers of phase and amplitude modulators, where phase and amplitude modulators in a first layer may be connected in series with one or more phase and amplitude modulators in a second layer.

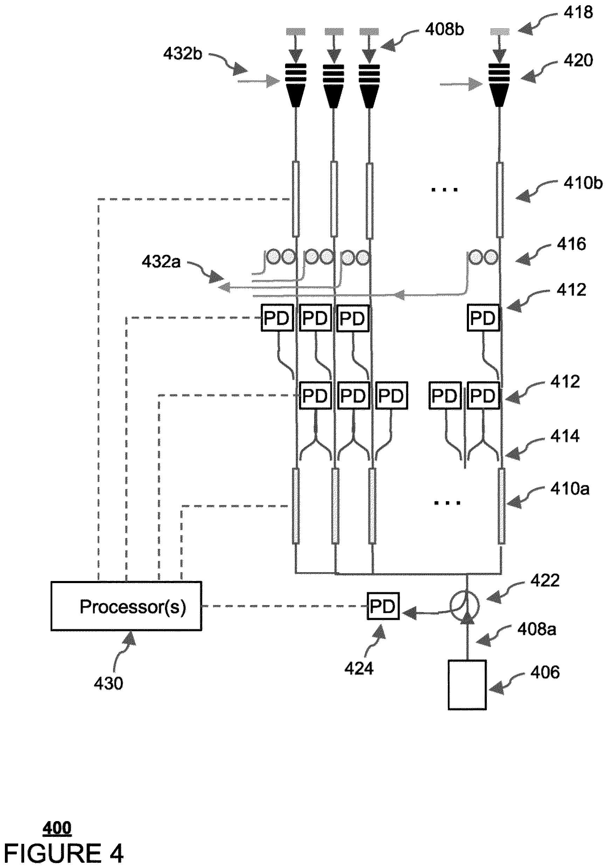

FIGURE 4 illustrates an example Optical Control Architecture (OCA) 400 that may be included in the OPA receiver 103, 203, the FPA OPA 204, or both. The OCA 400 includes a laser source 406, a plurality of phase and amplitude modulator layers 410, , a plurality of PDs 412, one or more waveguide tap couplers 414, one or more multiplexers or demultiplexers 416, a plurality of reflectors, partial reflectors, or retroreflector photonic constructs 418, a plurality of emitters 420, a photonic circulator 422, a PD 424, and one or more processors 430. In some instances, one or more components of the OCA 400 may be formed on a PIC.

The laser source 406 may be used to generate one or more control wavelengths, as discussed above, based on instructions from the one or more processors 430. The one or more control wavelengths may be propagated along the waveguides of the OCA 400 as illustrated by arrow 408a.

The one or more phase and amplitude modulator layers 410 include an optical control (OC) phase and amplitude modulator layers 410b. The OC phase and amplitude modulator layers 410b includes a plurality of PDs 412. As discussed above, the plurality of PDs 412 may be coupled to each phase and amplitude modulator in a layer of phase and amplitude modulators. FIGURE 4 illustrates that individual PDs of the plurality of PDs 412 may be coupled to two or more phase and amplitude modulators of a layer via a waveguide tap coupler, such as waveguide tap coupler 414. The plurality of PDs 412 may be configured to measure one or more values such intensity, power, and/or relative phase of the one or more control wavelengths. The measured values may be used in control and/or analysis of Rx light (e.g., as feedback). The measured values may be used in control and/or the analysis of components of the OCA 400.

In some instances, differing PDs may be configured to measure values at different waveguides of a phase and amplitude modulator layer to determine a relative phase. For example, an arrangement may include one PD measuring the intensity/power of a waveguide A, one PD measuring the intensity/power of an adjacent waveguide B, and one PD measuring the relative phase between waveguide A and B by mixing the two signals on one PD. Such an arrangement may provide the basic building block for the PD measurement system of the plurality of PDs. In addition, the same or a similar arrangement may be repeated for adjacent waveguides (e.g., B and C, C and D, and so forth). The measured values, measured by the 3 example PDs for waveguides A-B, may be represented as A², B², and A² +B² +2ABcos***φ***_{AB} respectively. The three measured values may allow for the determination of ***φ***_{AB}, or the relative phase of the light or signals propagating via waveguides A and B. Absolute phase measurements are also possible by using a fraction of the control wavelength(s) as a local oscillator to coherently interfere with the retroreflector control wavelengths which is propagated back and forth through the PIC at the plurality of PDs. This may require an additional plurality of phase modulators in the local oscillator paths with associated feedback electronics to phase lock the two together.

FIGURE 4 additionally illustrates that one or more phase and amplitude modulator layers 410, such as phase and amplitude modulator layer 410b. The phase and amplitude modulator layer 410b includes one or more multiplexers or demultiplexers 416 operatively connected thereto. In some instances, one or more multiplexers or demultiplexers 416 may route received light or signals to one or more of the plurality of PDs 412 for detection, electronic amplification and buffering, and/or analog to digital conversion. The received light or signals (e.g., from the environment of the imaging device, from another OPA of the imaging device) is represented by arrows 432. In this regard, received light 432b may be received by the plurality of emitters 420 and propagated through the OCA architecture to one or more multiplexers or demultiplexers 416 as illustrated by arrow 432b.

The plurality of reflectors 418 may be configured to reflect light or signals transmitted from the plurality of emitters 420, such as one or more control wavelengths represented by arrow 408b, back to the plurality emitters 420. The one or more reflected back control wavelengths may propagate through the OCA 400 and be directed to PD 424 via circulator 422. The measured value of signal measured by PD 424 may be processed by the one or more processors 430. The measured values may be used in control and/or the analysis of components of the OCA 400.

The one or more processors 430 as illustrated are operatively connected to the plurality of phase and amplitude modulator layers 410, the plurality of PDs 412, and PD 424. In this regard, the one or more processors may be configured to drive (e.g., modify the phase and/or amplitude) of the at least one layer of phase and amplitude modulators. Additionally, the one or more processors may be configured to utilize value(s) measured by the PDs to drive the at least one layer of modulators. In some instances, one or more multiplexers or demultiplexers may route signals to the PDs for detection, electronic amplification and buffering and Analog to Digital conversion.

For example, measured values, as discussed above, from the plurality of PDs 412 and PD 424 may be used in the control (e.g., to drive) the plurality of phase and amplitude modulator layers 410. In some instances, the one or more processors 430 may use the measured values both to compensate for determined phase errors (e.g., at the OC phase and amplitude modulator layer 410a) as well as to drive the plurality of phase and amplitude modulator layers 410 (e.g., layer 410b) to provide a particular phase to the plurality of emitters 420.

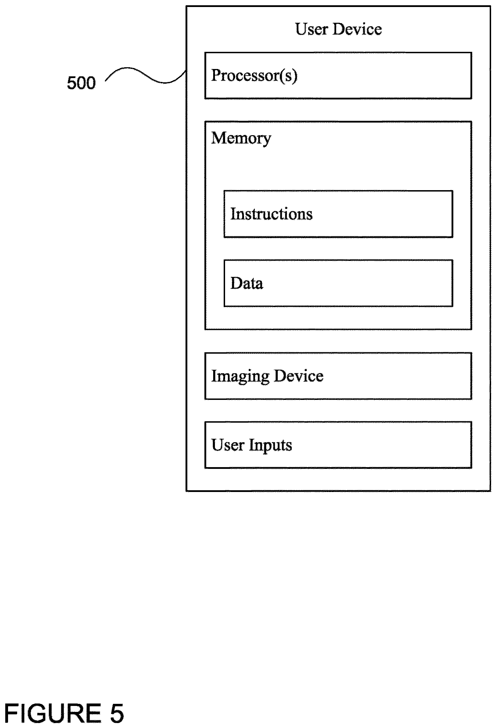

The example imaging device(s) and example architectures, discussed above, may be utilized as part of one or more user devices. In this regard, the example imaging device(s) and example architectures may be operatively connected and/or incorporated within one or more user devices such as a dedicated camera device, a mobile phone, tablet, laptop, desktop computer, or other computing device capable of communicating information with the imaging devices. FIGURE 5 illustrates an example user device 500 which includes an imaging device such as imaging device 101, 201 discussed above. Imaging device 101, 201 may include the architectures as described with respect FIGURES 3 and 4.

User device 500 may include one or more processors, memory, data and instructions. The memory stores information accessible by the one or more processors, including instructions and data that may be executed or otherwise used by the processor(s). The memory may be of any type capable of storing information accessible by the processor(s), including a computing device-readable medium. The memory is a non-transitory medium such as a hard-drive, memory card, optical disk, solid-state, etc. Systems may include different combinations of the foregoing; whereby different portions of the instructions and data are stored on different types of media. The instructions may be any set of instructions to be executed directly (such as machine code) or indirectly (such as scripts) by the processor(s). For example, the instructions may be stored as computing device code on the computing device-readable medium. In that regard, the terms "instructions", "modules" and "programs" may be used interchangeably herein. The instructions may be stored in object code format for direct processing by the processor, or in any other computing device language including scripts or collections of independent source code modules that are interpreted on demand or compiled in advance.

The processors may be any conventional processors, such as commercially available CPUs. Alternatively, each processor may be a dedicated device such as an ASIC, graphics processing unit (GPU), tensor processing unit (TPU) or other hardware-based processor. Although FIGURE 5 functionally illustrates the processors, memory, and other elements of a given computing device as being within the same block, such devices may actually include multiple processors, computing devices, or memories that may or may not be stored within the same physical housing. Similarly, the memory may be a hard drive or other storage media located in a housing different from that of the processor(s), for instance in a cloud computing system of server 802. Accordingly, references to a processor or memory will be understood to include references to a collection of processors or memories that may or may not operate in parallel.

The user device 500 may include all of the components normally used in connection with a computing device such as the processor and memory described above as well as a user interface subsystem for receiving input from a user and presenting information to the user (e.g., text, imagery and/or other graphical elements, audibly and/or via haptic feedback). The user interface subsystem may include one or more user inputs (e.g., at least one front (user) facing camera, a mouse, keyboard, touchscreen and/or microphone) and one or more display devices that is operable to display information (e.g., text, imagery and/or other graphical elements). Other output devices, such as speaker(s) may also provide information to users.

Alternatively, an imaging device, such as imaging device 101, 201, may be a standalone device capable of communicating with processors of a user device via a wireless or wired connection. Such a user device may communicate with an imaging device via one or more networks. The one or more networks, may include various configurations and protocols including short range communication protocols such as Bluetooth^{™}, Bluetooth LE^{™}, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

### Example Methods

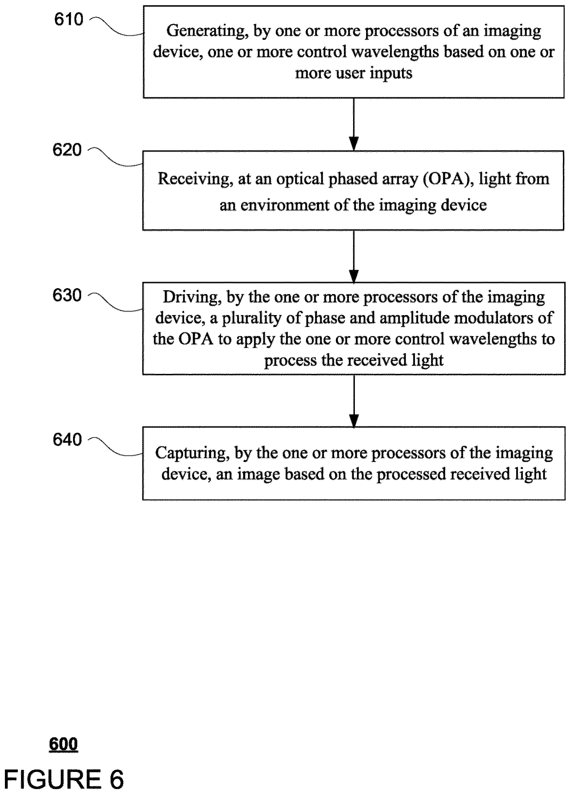

The imaging devices 101, 201 discussed above may be used in a method of capturing one or more images using the imaging devices. FIGURE 6 illustrates an example method 600 of capturing one or more images using an imaging device. At block 610 the method includes generating, by one or more processors of an imaging device, one or more control wavelengths based on one or more user inputs. For instance, the one or more processors 218, 430 of the imaging device 218 (e.g., CMOS processors) may be configured to generate the one or more control wavelengths 408 via one or more light sources 219, 406 (e.g., light emitting diode (LED), integrated on-PIC laser, external coupled laser, etc.). As discussed above, the one or more control wavelengths may be in a particular wavelength band (e.g., color band); may be based on one or more sensor measurements from one or more sensors 209 (e.g., gyroscope accelerometer, IMU, etc.); may correspond to a portion of FOV on the imaging device 101, 201; may be in a particular focal plane in relation of the imaging device 101, 201; and/or may correspond to a particular intensity.

In some instances, the one or more control wavelengths may be determined based on one or more inputs from a user. The one or more inputs may be received at a user interface of a user computing device (e.g., user device 500) such as a dedicated camera device, a mobile phone, tablet, laptop, desktop computer, or other computing device capable of communicating information with the imaging devices. In this regard, the imaging device 101, 201 may be incorporated into any of the aforementioned devices. Alternatively, the imaging device 101, 201 may be a standalone device capable of communicating with processors of the aforementioned devices via a wireless or wired connection. For instance, a user may select a mode or feature that determines what control wavelength(s) and corresponding processing is performed on incoming light. For example, a user may select infrared image capture. In such an example, the one or more control wavelengths may be in the infrared band.

At block 620, the method further includes receiving, at an optical phased array (OPA), light from an environment of the imaging device. For instance, the OPA receiver 103, 203 of the imaging device 101, 201 may be configured to receive light from the environment of the imaging device 101, 201. Specifically, the plurality of emitters or optical antennas 215, 320, 420 of the OPA may be configured to receive the light from the environment of the imaging device 101, 201.

At block 630, the method further includes driving, by the one or more processors of the imaging device, a plurality of phase and amplitude modulators of an optical phased array (OPA) to apply the one or more control wavelengths to process the received light. For instance, the one or more processors 218, 430 of the imaging device may be configured to apply the one or more control wavelengths to Rx light by driving the plurality of phase and amplitude modulators 212, 330.

As discussed above, a control wavelength may be in a particular color band (e.g., the blue band, green band, red band, infrared band, etc.) to more closely match the optical propagation characteristics of the Rx spectral bands. In such an example, if a control wavelength is in the red band, the Rx light may be processed using the control wavelength in the red band such that the Rx light red band shows the same functional performance as the associated red control wavelength. The bands may be broken up into more and more sub-bands to improve this correlation. The control wavelengths may be multiplexed/demultiplexed spectrally around the Rx light bands, temporally multiplexed with higher peak power and/or coherently mixed with a local oscillator at the PD to provide higher signal contrast relative to the Rx light..

Additionally or alternatively, the feedback on the Rx light using the one or more control wavelengths may be based on one or more sensor measurements from one or more sensors 209 (e.g., gyroscope accelerometer, inertial measurement unit (IMU), etc.). In some instances, the feedback based on the one or more sensor measurements may be updated during each time step (e.g., time corresponding to the receipt of the one or more measurements). In this regard, the one or more control wavelengths may process Rx light to cancel out or compensate for noise or motion detected by the one or more sensors 209. In some instances, the feedback on the Rx light using the one or more control wavelengths may be updated based on the one or more sensor measurements during each time step (e.g., time corresponding to the receipt of the one or more measurements).

Additionally or alternatively, the feedback on the Rx light using the one or more control wavelengths may be generated based on one or more sensor measurements from the one or more sensors 209 (e.g., gyroscope accelerometer, inertial measurement unit (IMU), etc.). In some instances, the feedback based on the one or more sensor measurements may be updated during each time step (e.g., time corresponding to the receipt of the one or more measurements). In this regard, the one or more control wavelengths may process Rx light to cancel out or compensate for noise or motion detected by the one or more sensors 209. In some instances, the feedback on the Rx light using the one or more control wavelengths may be updated based on the one or more sensor measurements during each time step (e.g., time corresponding to the receipt of the one or more measurements).

Additionally or alternatively, the one or more control wavelengths may be used to look at the Rx light within a portion of FOV on the imaging device. In this regard, the one or more control wavelengths may process Rx light such that only Rx light within a particular portion of a FOV is routed through the imaging device and captured as an image. As such, the portion of the total FOV or FOR may be captured without need to physically move the imaging device 201.

. Additionally or alternatively, the one or more control wavelengths may be used to set an image plane. The image plane may be a particular distance from the imaging device. In this regard, the feedback on the Rx light using the one or more control wavelengths may process Rx light such that light at a particular image plane this is in focus at the imaging device. A series of these images at different planes can be saved in quick temporal succession to form an image hypercube from which the image plane of interest can be chosen or a three dimensional image can be rendered.

Additionally or alternatively, the one or more control wavelengths may be used as feedback for a particular intensity or be generated based on a target pattern. The target pattern may include example images with particular intensity measurements to be compared to or correlated with the Rx light. In this regard, the one or more control wavelengths may process Rx light such that glint or high intensity values may not survive the processing.

As discussed above, the one or more control wavelengths and functionality enabled thereby may be determined based on one or more inputs from a user. The one or more inputs may be received at a user interface. In this regard, a user may select a mode or feature that determines what control wavelength(s) are generated and by extension, how the processing of the received light is performed.

In some instances, the driving of the plurality of phase and amplitude may be based on one or more measured values from one or more PDs. In this regard, the plurality of phase and amplitude modulators 212, 330 of the OPA receiver 103, 203 may be driven based on feedback related to measured values associated with the propagating one or more control wavelengths 408. In some instances, the feedback may additionally be related to measured values associated with the received light 432. Measured values, as discussed above, from a plurality of PDs 213, 412 and PD 424 may be used in the control (e.g., to drive) the plurality of phase and amplitude modulators 212, 330 and layers thereof 410. In some instances, the one or more processors 218, 430 may use the measured values both to compensate for determined phase errors as well as to drive the plurality of phase and amplitude modulator layers 410.

At block 640, the method further includes capturing, by the one or more processors of the imaging device, an image based on the processed received light. For instance, the one or more processors 218, 430 may capture or record an image of the processed light using the FPA 105, 205 of the imaging device 101, 201. In some instances, the captured image may be saved in the memory 220 of the imaging device 101, 201.

In some instances, the method may further include transmitting, by the OPA or emitters thereof, the one or more control wavelengths; reflecting, by the OPA or one or more reflectors thereof, the one or more control wavelengths back; and receiving, by OPA or emitters thereof, the one or more control wavelengths. In this regard, the plurality of emitters or antennas 211, 320, 420 of the OPA receiver 103, 203 may be configured to transmit the one or more control wavelengths 408. The one or more control wavelengths 408b may be reflected back to the plurality of emitters 211, 320, 420 via the one or more reflectors 210, 418. In this regard, the reflected back control wavelengths may be used for phase and wavefront control of the Rx light as discussed above.

In some instances, the method may further include transmitting, by the OPA, the processed received light to a second OPA; and transmitting, by the second OPA, the processed received light to an FPA of the imaging device. In this regard, the OPA receiver 103, 203 may transmit the processed received light to the FPA OPA 104, 204. The processed received light may be received at the emitters 215, 320, 420 of the FPA OPA 104, 204. Additionally, the processed received light may be further transmitted by the FPA OPA 104, 204 by the emitters 215, 320, 420 thereof to the FPA 105, 205. In this regard, the FPA 105, 205 may receive the light from the FPA OPA 104, 204 and record an image based on the received light. The recorded image may be saved on a memory (e.g., memory 220) of the imaging device 201.

In some instances, an amplitude modulator array of the FPA 105, 205 can be used to adjust the amount of light directed to elements of the FPA 205 on an element-by-element basis. This adjustment can, for example, be utilized for brightness adjustment, glint removal, aperture stop adjustment, as well as other amplitude dependent operations.

In some instances, the method may further include transmitting, by the second OPA or emitters thereof, the one or more control wavelengths; reflecting, by the second OPA or one or more reflectors thereof, the one or more control wavelengths back; and receiving, by second OPA or emitters thereof, the one or more control wavelengths. In this regard, the plurality of emitters or antennas 215, 320, 420 of the FPA OPA 104, 204 may be configured to transmit the one or more control wavelengths 408. The one or more control wavelengths 408b may be reflected back to the plurality of emitters 215, 320, 420 via the one or more reflectors 214, 418. In this regard, the reflected back control wavelengths may be used for phase and wavefront control of the processed Rx light as discussed above.

In some instances, the method may further include driving, by the one or more processors of the imaging device, a plurality of phase and amplitude modulators of the second OPA to apply the one or more control wavelengths to further process the processed received light. In this regard, the one or more processors 218, 430 of the imaging device may be configured to apply the one or more control wavelengths to Rx light at the FPA OPA 104, 204 by driving the plurality of phase and amplitude modulators 216, 330.

As discussed above, the one or more control wavelengths may be determined based on one or more inputs from a user. The one or more inputs may be received at a user interface. In this regard, a user may select a mode or feature that determines what control wavelength(s) are generated and by extension, the processing of the received light.

In some instances, the driving of the plurality of phase and amplitude may be based on one or more measured values from one or more PDs. In this regard, the plurality of phase and amplitude modulators 216, 330 of the FPA OPA 104, 204 may be driven based on feedback related to measured values associated with the propagating one or more control wavelengths 408. In some instances, the feedback may additionally be related to measured values associated with the received light 432. Measured values, as discussed above, from a plurality of PDs 217, 412 and PD 424 may be used in the control (e.g., to drive) the plurality of phase and amplitude modulators 216, 330 and layers thereof 410. In some instances, the one or more processors 218, 430 may use the measured values both to compensate for determined phase errors as well as to drive the plurality of phase and amplitude modulator layers 410.

In some instances, the OPA receiver 103, 203 and the FPA OPA 104, 204 may be configured to perform different forms of Rx light processing, discussed above, in conjunction with the one or more processors 218, 430 of the imaging device 101, 201. In this regard, the one or more processors 218, 430 of the imaging device 101, 201 may be configured to generate the one or more control wavelengths via one or more light sources 219, 406. In one example, the one or more control wavelengths that may be based on one or more sensor measurements of sensors 209, that may correspond to a portion of the FOV of the imaging device, and/or that may be in a particular focal plane may be transmitted, reflected back, and used for phase and wavefront control of Rx light at the OPA receiver 103, 203. In such an example, the one or more control wavelengths that may be in a particular color band, and/or may correspond to a particular intensity or be generated based on a target pattern may be transmitted, reflected back, and used to process Rx light at the FPA OPA 104, 204.

In some instances, the one or more control wavelengths may be a plurality of control wavelengths, such as a first control wavelength and a second control wavelength. In such an instance, the method steps discussed above may be repeated based on the number of control wavelengths. For example, if a user selects a full color image, or image including all the colors of the visible light spectrum, control wavelengths corresponding to each band of the visible light may be used to process Rx light iteratively. In this regard, the one or more processors of the imaging device may record or collect 1-N images at sequential time steps. Each of the 1-N images in a different visible light band. The recorded images may be stored in the memory of the imaging device. In such an instance the method may further include generating, by the one or more processors of the imaging device, a composite image. In this regard, the one or more processors of the imaging device may be further configured to generate the full color image using the 1-N stored images.

The features and methodology described herein may provide a scalable imaging device capable of performing complex image processing using one or more injected or applied control wavelengths and wavefronts to maintain the proper relationships between the received light components and images, resulting in improved image capture capabilities. In this regard, the imaging device may be able to perform real time color processing and intensity manipulation; image stabilization to compensate for external vibrations and disturbances; the ability to capture panoramic images without moving the imaging device; and correct the focal plane of the image in real time (focal plane adjustment).

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only some of many possible embodiments. Further, the same reference numbers in different drawings can identify the same or similar elements.

## Claims

1. A method of capturing one or more images using an imaging device comprising:
generating, by one or more processors of an imaging device, one or more control wavelengths based on one or more user inputs;
receiving, at an optical phased array (OPA), light from an environment of the imaging device;
driving, by the one or more processors of the imaging device, a plurality of phase and amplitude modulators of the OPA to apply the one or more control wavelengths to process the received light; and
capturing, by the one or more processors of the imaging device, an image based on the processed received light.

2. The method of claim 1, wherein:
generating, by the one or more processors of the imaging device, the one or more control wavelengths based on the one or more user inputs includes generating a first control wavelength and a second control wavelength;
receiving, at the OPA, light from the environment of the imaging device includes receiving light at a first time step and a second time step;
driving, by the one or more processors of the imaging device, the plurality of phase and amplitude modulators of the OPA to apply the one or more control wavelengths to process the received light includes driving the plurality of phase and amplitude modulators at the first time step to apply the first control wavelength to process the light received at the first time step and driving the plurality of phase and amplitude modulators at the second time step to apply the second control wavelength to process the light received at the second time step; and
capturing, by the one or more processors of the imaging device, an image based on the processed received light includes capturing a first image at the first time step based on the processed light received at the first time step and capturing a second image at the second time step based on the processed light received at the second time step.

3. The method of claim 2, further comprising:
generating, by the one or more processors of the imaging device, a composite image of the first image and the second image.

4. The method of any preceding claim, further comprising:
transmitting, by the OPA of the imaging device, the one or more control wavelengths; reflecting, by the OPA of the imaging device, the one or more control wavelengths back; and
receiving, by OPA of the imaging device, the one or more control wavelengths.

5. The method of any preceding claim, wherein the one or more user inputs are received from a user interface.

6. The method of any preceding claim, wherein driving, by the one or more processors of the imaging device, the plurality of phase and amplitude modulators of the OPA to apply the one or more control wavelengths to process the received light includes:
measuring, by one or more photodiodes, one or more measurements associated with the one or more control wavelengths; and one of:
i) driving, the plurality of phase and amplitude modulators based on the one or more measured values associated with the one or more control wavelengths, or
ii) driving, the plurality of phase and amplitude modulators based on the one or more measurements associated with the received light, or
iii) driving, the plurality of phase and amplitude modulators based on the one or more measured values associated with the one or more control wavelengths and the received light, and
optionally wherein the one or more measurements are at least one of i) intensity; ii) power; and iii) relative phase.

7. The method of any preceding claim, further comprising:
transmitting, by the OPA, the processed received light to a second OPA; and
transmitting, by the second OPA, the processed received light to a focal plane array (FPA) of the imaging device.

8. The method of claim 7, further comprising:
adjusting, by an amplitude modulator array of the FPA, an amount of light received at one or more elements of the FPA, and/or
driving, by the one or more processors of the imaging device, a plurality of phase and amplitude modulators of the second OPA to apply the one or more control wavelengths to further process the processed received light.

9. The method of claim 7, wherein the one or more control wavelengths are a plurality of control wavelengths, and optionally wherein driving, by the one or more processors of the imaging device, the plurality of phase and amplitude modulators of the OPA to apply the plurality of control wavelengths to process the received light includes applying a first control wavelength of the plurality of control wavelengths; and
wherein, driving, by the one or more processors of the imaging device, the plurality of phase and amplitude modulators of the second OPA to apply the one or more control wavelengths to further process the processed received light includes applying a second control wavelength of the plurality of control wavelengths, wherein the second control wavelength is different from the first control wavelength.

10. An imaging device configured to capture one or more images, the imaging device comprising:
an optical phased array (OPA) receiver, the OPA receiver comprising:
a plurality of emitters configured to transmit and receive light,
a plurality of phase and amplitude modulations configured to modulate light propagating through the imaging device, and
one or more photodiodes configured to measure one or more values associated with light propagating through the imaging device,
a focal plane array (FPA) OPA, the FPA OPA comprising:
a plurality of emitters configured to transmit and receive light,
a plurality of phase and amplitude modulations configured to modulate light propagating through the imaging device, and
one or more photodiodes configured to measure one or more values associated with light propagating through the imaging device;
a control unit, the control unit comprising:
one or more processors, and
one or more light sources configured to generate light; and
a FPA configured to receive light from the FPA OPA and record an image based on the received light;
wherein the OPA receiver, the FPA OPA, and the control unit are disposed on a photonics integrated circuit (PIC).

11. The imaging device of claim 10, wherein the OPA receiver further includes one or more reflectors associated with an emitter the plurality of the emitters, the one or more reflectors configured to reflect one or more control wavelengths back to the emitter of the plurality of emitters.

12. The imaging device of claim 10 or claim 11, further comprising one or more micro-lens arrays associated with at least one of i) the OPA receiver, and ii) the FPA OPA.

13. The imaging device of any of claims 10 to 12, further comprising one or more sensors configured to collect one or more sensor measurements, wherein the one or more sensors include at least one of i) a gyroscope, an accelerometer, and inertial measurement unit (IMU).

14. The imaging device of any of claims 10 to 13, wherein the imaging device is arranged in a stack configuration.

15. The imaging device of any of claims 10 to 14, wherein the one or more processors are configured to:
generate, one or more control wavelengths based on one or more user inputs;
drive at least one of i) the plurality of phase and amplitude modulators of the OPA receiver to apply the one or more control wavelengths to process received light, and ii) the plurality of phase and amplitude modulators of the FPA OPA to apply the one or more control wavelengths to process received light; and
capture an image based on the processed received light.
